(19) Europäisches Patentamt / European Patent Office / Office européen des brevets

(11) **EP 3 800 636 B1**

(12) **EUROPEAN PATENT SPECIFICATION**

(45) Date of publication and mention of the grant of the patent:
**08.03.2023 Bulletin 2023/10**

(21) Application number: **20204377.4**

(22) Date of filing: **12.09.2018**

(51) International Patent Classification (IPC):
**G10L 19/005** $^{(2013.01)}$     G10L 25/12 $^{(2013.01)}$
**G10L 25/18** $^{(2013.01)}$     G10L 19/02 $^{(2006.01)}$

(52) Cooperative Patent Classification (CPC):
**G10L 19/005;** G10L 19/0204; G10L 25/12; G10L 25/18

(54) **PACKET LOSS CONCEALMENT FOR CRITICALLY-SAMPLED FILTER BANK-BASED CODECS USING MULTI-SINUSOIDAL DETECTION**

PAKETVERLUSTVERDECKUNG FÜR KRITISCH ABGETASTETE FILTERBANKBASIERTE CODECS MIT MULTISINUSDETEKTION

DISSIMULATION DE PERTE DE PAQUETS POUR DES CODECS À BASE DE BANQUES DE FILTRES À ÉCHANTILLONNAGE CRITIQUE AU MOYEN D'UNE DÉTECTION MULTISINUSOÏDALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2017 PCT/CN2017/101426**
**01.11.2017 US 201762580313 P**
**14.11.2017 EP 17201565**

(43) Date of publication of application:
**07.04.2021 Bulletin 2021/14**

(62) Document number(s) of the earlier application(s) in accordance with Art. 76 EPC:
**18193942.2 / 3 454 336**

(73) Proprietors:
• **Dolby Laboratories Licensing Corporation**
**San Francisco, CA 94103 (US)**
• **Dolby International AB**
**Dublin, D02 VK60 (IE)**

(72) Inventors:
• **HUANG, Shen**
**Beijing, 100022 (CN)**
• **VILLEMOES, Lars**
**113 30 Stockholm (SE)**

(74) Representative: **AWA Sweden AB**
**Box 5117**
**200 71 Malmö (SE)**

(56) References cited:
**WO-A1-2014/108393     WO-A1-2014/202770**

• **"3rd Generation Partnership Project; Technical Specification Group Services and System Aspects; Codec for Enhanced Voice Services (EVS); Error Concealment of Lost Packets (Release 12)", 3GPP DRAFT; 26447-C70, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 9 June 2017 (2017-06-09), XP051289884, Retrieved from the Internet: URL:http://www.3gpp.org/ftp/tsg_sa/WG4_COD EC/Specs_update_after_SA76/ [retrieved on 2017-06-09]**
• **DAUDET L ET AL: "MDCT Analysis of Sinusoids: Exact Results and Applications to Coding Artifacts Reduction", IEEE TRANSACTIONS ON SPEECH AND AUDIO PROCESSING, IEEE SERVICE CENTER, NEW YORK, NY, US, vol. 12, no. 3, 1 May 2004 (2004-05-01), pages 302-312, XP011111119, ISSN: 1063-6676, DOI: 10.1109/TSA.2004.825669**

**Description**

CROSS-REFERENCE TO RELATED APPLICATION

This application is a European divisional application of European patent application EP 18193942.2 (reference: D16100EP01), filed 12 September 2018.

TECHNICAL FIELD

Embodiments herein relate generally to audio signal processing, and more specifically to concealment of artifacts resulting from a loss of audio data packets encoded by critically-sampled transform during transmission over a packet-switched network.

BACKGROUND

The European search report (ESR) cites WO 2014/202770 A1, that describes an approach for obtaining spectrum coefficients for a replacement frame (m) of an audio signal. A tonal component of a spectrum of an audio signal is detected based on a peak that exists in the spectra of frames preceding a replacement frame (m). For the tonal component of the spectrum a spectrum coefficients for the peak (502) and its surrounding in the spectrum of the replacement frame (m) is predicted, and for the non-tonal component of the spectrum a non-predicted spectrum coefficient for the replacement frame (m) or a corresponding spectrum coefficient of a frame preceding the replacement frame (m) is used.

The ESR further cites "3rd Generation Partnership Project; Technical Specification Group Services and System Aspects; Codec for Enhanced Voice Services (EVS); Error Concealment of Lost Packets (Release 12)", 3GPP DRAFT; 26447-C70, that describes MDCT Frame repetition with sign scrambling, tonal MDCT concealment using phase prediction, MDCT frame repetition with random sign and gain scaling and MDCT frame repetition with sign prediction.

The ESR further cites DAUDET L ET AL: "MDCT Analysis of Sinusoids: Exact Results and Applications to Coding Artifacts Reduction", IEEE TRANSACTIONS ON SPEECH AND AUDIO PROCESSING, vol. 12, no. 3, that describes computing a pseudo-spectrum for MDCT coefficients which provides, at a low computational cost, a good approximation of the local spectrum of the signal, with an improved behavior with respect to frequency and phase than the classical MDCT spectrum, i.e. the absolute value of the coefficients.

SUMMARY OF THE INVENTION

The invention is set out in the appended set of claims.

BRIEF DESCRIPTION OF THE FIGURES

This disclosure is illustrated by way of example and not limitation in the figures of the accompanying drawings, in which like references indicate similar elements, and in which:

FIG. 1 shows a flow diagram for a method for concealing packet loss in a received audio stream using a two-frame multi-sinusoid detector, according to an embodiment not falling under the scope of the appended claims.

FIG. 2 shows a simplified block diagram of a system for concealing packet loss in a received audio stream, according to an embodiment not falling under the scope of the appended claims.

FIG. 3 shows plots of three consecutive frames of an audio stream, where the third frame is predicted using a method for packet loss concealment, according to an embodiment not falling under the scope of the appended claims.

FIG. 4 shows plots of selected sub-band predictors used to perform packet loss concealment, according to an embodiment of the invention.

FIG. 5 shows a representation of selected frequency bins of a previous frame and the application of sub-band predictors to generate coefficients for a replacement frame, according to an embodiment of the invention.

FIG. 6 shows a flow diagram for method for concealing packet loss in a received audio stream using a single-frame multi-sinusoid detector, according to an embodiment of the invention.

FIG. 7 shows a plot illustrating impact of weight value on prediction error in a single-frame multi-sinusoid detector, according to an embodiment of the invention.

FIG. 8 shows a simplified block diagram of a plurality of frames where different types of packet loss concealment are applied, according to an embodiment of the invention.

FIG. 9 is a block diagram of an exemplary system for concealing packet loss using multi-sinusoid detection, according to an embodiment of the invention.

## DETAILED DESCRIPTION

Packet loss may occur frequently in Voice Over Internet Protocol ("VoIP") or wireless voice communications under adverse connection conditions. Lost packets may result in clicks and pops or other artifacts that greatly degrade the perceived speech quality at the receiver side. To combat the adverse impact of packet loss, Packet Loss Concealment ("PLC") algorithms, also known as frame erasure concealment algorithms, may be utilized. Conventional PLC approaches typically attempt to predict the missing speech signal from the speech signal immediately preceding the dropout. These conventional approaches may be successful when the gaps are short (e.g., a few milliseconds) and occur at places in the speech signal that can be predicted well from past speech samples. However, when the gaps are longer or occur at a time when there is a transition in the speech signal, the concealment may fail, and the reconstructed speech may sound unnatural and slurred.

For packet loss concealment targeting Critically Sampled Transform ("CST") codecs such as the modified discrete cosine transform ("MDCT"), conventional algorithms (such as the 3GPP codec PLC described in 3GPP TS 26.410: "General audio codec audio processing functions; Enhanced aacPlus general audio codec; Floating point ANSI-C code", Jan. 2005, referred to as "3GPP PLC") may utilize packet repetition and shaped-noise insertion to estimate lost information only in the CST domain. Assuming CST coefficients of the p-th frame are lost, the parameters of the previous and next packet may be extracted by computing the spectral energy of CST coefficients in each scale factor band. After repeating the previous packet and applying scaling parameters from neighboring packets to the repeated packet, the final synthesis may be completed by assigning random signs to the repeated and scaled coefficients, as shown below in equation 1.

$$\overline{X}_p\,[k] = X_{p-1}\,[k]\,\hat{\alpha}[k]\,s[k] \qquad\qquad (1)$$

In equation 1, $X_p\,[k]$ is the CST coefficient for $p$-th frame and $k$ th bin, $s[k]$ is a randomized sign and $\hat{\alpha}[k]$ is the energy scaling factor computed in each scale band from both a previous and a future packet.

However, one of the drawbacks for the 3GPP PLC algorithm is that for tonal signals such as speech, the concealment may produce audible artifacts. To address this issue, other proposed solutions may use frame interpolation and magnitude scaling, where a look-ahead packet is required to eliminate the artifacts. However, waiting for a look-ahead packet to be received and then performing PLC is highly undesirable for real-time VoIP systems, which may have stringent latency requirements.

Another problem facing CST-domain PLC solutions is that incorrect signs of CST coefficients may also result in audible artifacts, especially in tonal bands. Many of the challenges in developing PLC for CST-based codecs stem from the fact that CST is a critically-sampled process. Inverse critically sampled transform-based reconstruction may require an anti-aliasing process because the time-domain signal synthesized from one packet may be incomplete/aliased unless another half-aliased signal from the lost packet is provided. When modified coefficients are inverse-transformed back to the time domain, Time Domain Aliasing Cancellation ("TDAC") properties may no longer be preserved, which can cause distortion artifacts to be created. This problem may be exacerbated during long burst loss, when distorted signals may be replicated or treated blindly using a conventional time domain method.

The solution described below includes a PLC algorithm for critically-sampled filter bank-based codecs, aiming at addressing the issues described above. The multi-sinusoidal detection-based PLC algorithm described herein is a causal algorithm that may provide accurate phase alignment to avoid creating audible artifacts when the audio stream is reconstructed. By using a critically-sampled filter bank, the solution may have access to time-frequency representations of the sinusoids, where both perceptual irrelevancy and signal redundancy can be exploited. Computing CST coefficients for random signals using numerical convolution may provide PLC without leading to perceptual artifacts. However, given that speech may include multiple analytic signals such as sinusoids, it may be more efficient to estimate the frequency coefficients by directly analyzing the analytic signal with the CST filter-bank.

The proposed approach extrapolates the CST coefficients of a lost frame by analytic prediction of multiple sinusoids, which using selected frequency parameters may result in near perfect phase alignment. A speech signal can be assumed, at least for small windows (e.g., 20 ms, as longer windows may contain warping, discontinuity, and/or branching of sinusoids) to be a combination of multiple sinusoids at a particular frequency range, where each sinusoid may be identified by numerical search and detection. The detection step may be determined by frequency resolution, and may be adaptive in run-time. Also, the frequency coefficients of periodic signals may be predicted using several key parameters. When the period is large compared to the extent of the filter bank window (e.g., 40 ms), a long-term predictor can be implemented in the discrete time domain by means of a shift or a fractional delay, and converted back into a causal predictor in the sub-band domain without causing aliasing artifacts. However, when the period is shorter than the filter-bank window length (e.g., when the signal has a fundamental frequency larger than 25 Hz), the multi-sinusoidal prediction may not be possible without causing some aliasing artifacts.

The proposed approach may utilize the causal predictor described above operating in CST-based filter-banks to provide PLC. After sub-band coefficients of a previous frame are received, the predictor may be applied at each frequency bin to obtain the sub-band coefficients for the next frame, thereby producing a set of alias-free sinusoid coefficients in the audio bitstream. If there is a bursty loss (i.e. subsequent lost frames after the predicted frame), for the rest of frames, another PLC algorithm may be utilized to mitigate any robotic-sounding artifacts. Overall, the proposed approach advantageously provides a causal PLC solution (i.e. the solution may depend only on CST coefficients of previous frames, so no look-ahead packets are used) with substantially zero delay. The proposed solution may also provide near alias-free PLC, for superior quality against any other known PLC algorithm for CST. Packet loss concealments can be manipulated in transform domain, which can be configured in a server or client without decoding to time samples. Furthermore, if more historical packets, look-ahead information in the next arrived packet, frame and band types, and/or time domain access are available, alternative embodiments may be utilized to achieve even greater performance.

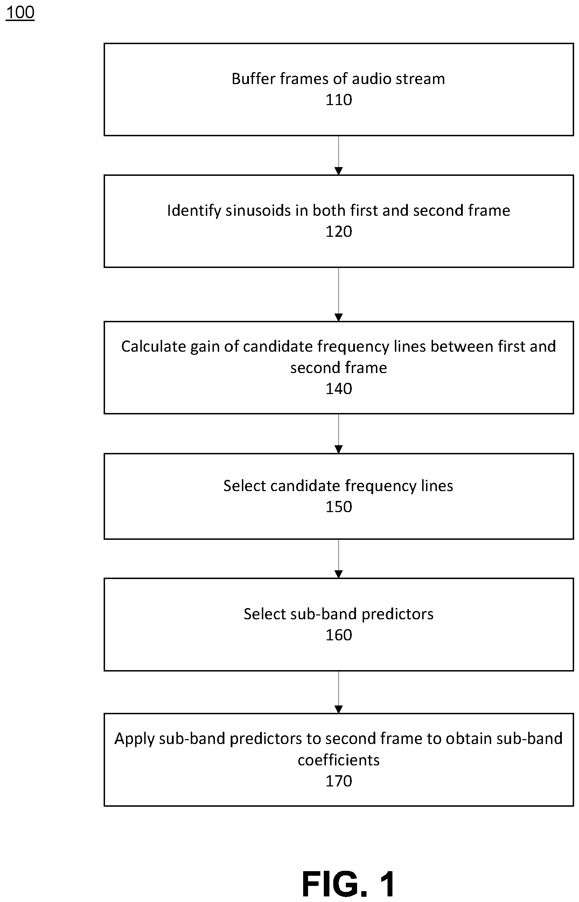

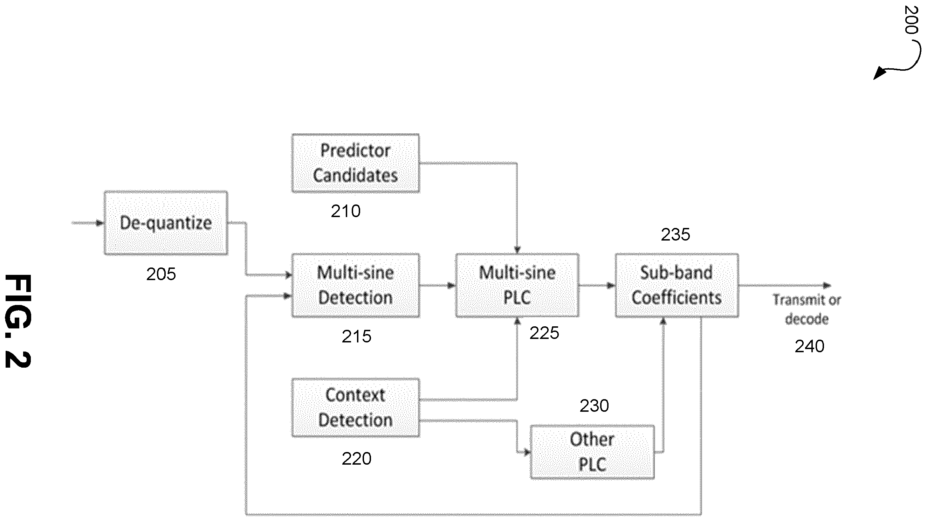

FIG. 1 shows a flow diagram for exemplary method 100 for concealing packet loss in a received audio stream. Method 100 uses a two-frame multi-sinusoid detector; however, as the description below shows, other multi-sinusoid detection techniques may be used. FIG. 2 shows a simplified block diagram of a system 200 for concealing packet loss in a received audio stream, according to an embodiment, using the method 100 described in FIG. 1. The exemplary PLC system 200 includes modules for audio stream de-quantization 205, multi-sine detection 215, predictor candidate storage 210, context detection 220, multi-sine PLC 225, other PLC 230, and sub-band coefficient generation 235.

In method 100, frames of the received audio stream may be de-quantized into CST sub-band coefficients at step 110 and stored in a buffer. This may be performed by de-quantization module 205 of system 200, for example. In response to receiving a determination that a frame of the audio stream has been lost, a plurality of sinusoids may be identified in the frames immediately preceding the lost frame at step 120. This multi-sinusoid detection may be performed by module 215 of system 200, using any of the methods of detecting multiple sinusoids described herein. Multi-sinusoid detection module 215 may obtain the sinusoid components in the audio stream, which includes: 1) how many frequency lines are going to be extrapolated in the lost signal; 2) frequency position of each frequency line.

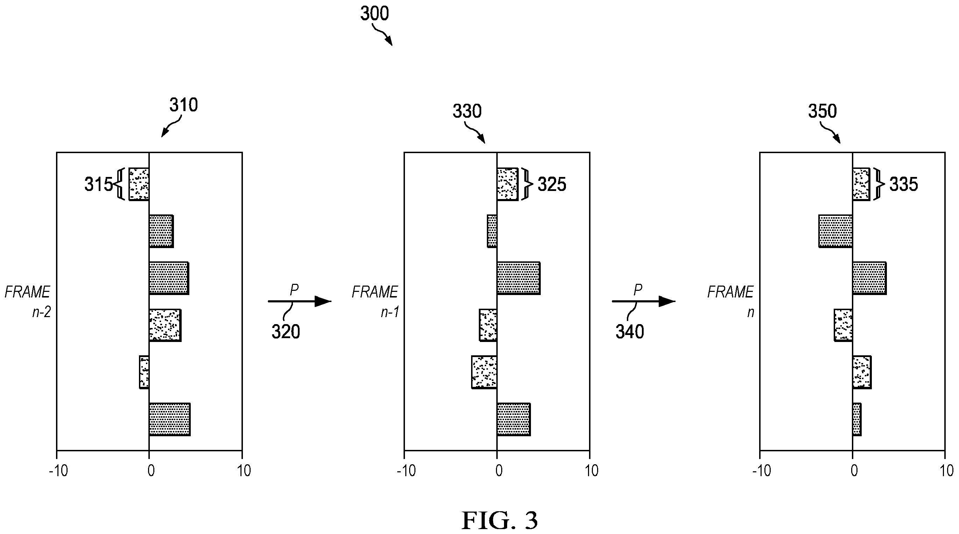

The exemplary method 100 uses a two-frame sinusoid detector in which the plurality of sinusoids are detected within a first frame of the received audio stream and a second frame of the received audio stream, where the first frame occurs two frames prior to the lost frame and the second frame occurs one frame prior to the lost frame. FIG. 3 shows plots 300 of three consecutive frames 310, 330, 350 of an audio stream, where the third frame 350 is predicted using a method for packet loss concealment, according to an embodiment. First frame 310 displays six extracted frequency bins, such as bin 315, while the x-axis measures the coefficient values of the frame within each bin. Likewise, figure 3 shows frequency bins 325, 335 of frames 330, 350, respectively. Two-frame multi-sinusoidal detection may be employed if the previous two packets satisfy two conditions, in some embodiments. First, both previous packets may be required to include tonal speech (i.e. speech with voice signals included). Any suitable measure may be used to determine if the first two frames both include tonal speech. For example, a "signal harmony ratio" of a pseudo spectrum of the CST coefficients of each of the first two frames may be determined and used to determine whether or not both of the first two frames include tonal speech, e.g. by determining whether the signal harmony ratio satisfies a threshold condition. See Sun, Xuejing: "Pitch Determination and Voice Quality Analysis using Subharmonic-to-Harmonic Ration", presented at the International Conference on Acoustics, Speech, and Signal Processing 2002. Other methods of determining the presence of tonal speech in the previous frames may include any voiced/unvoiced detection features of suitable voice activity detection (VAD) products, including using a prediction gain of a long-term predictor, using a zero-crossing rate of the speech waveform in the previous frames, or using machine learning methods. Second, both previous frames should be transmitted frames within the audio stream, meaning that both first frame 310 and second frame 330 of the frames were not produced using PLC techniques.

After enumerating all the blocks to the end of the CST coefficients in that frame, an absolute prediction gain is calculated for each frequency line in the first frame at step 140. An exemplary formula that may be used to determine the gain for a frequency line is shown in equation 2:

$$G = \|y_{\text{block}}\|^2 - S \qquad\qquad\qquad . \qquad\qquad (2)$$

Here, $y_{\text{block}}$ is a block of target CST coefficients from Np consecutive bins, and S is as a measure of the error of predicting $y_{\text{block}}$ from a corresponding block $x_{\text{block}}$ of source CST coefficients. One embodiment of S is given by Equation 3.

At step 150, candidate frequency lines may be selected based on the calculated gains. There are several different methods that may be used to select the candidate frequency lines. In detecting the multiple sinusoids, an objective may be to select a set of frequency lines that can optimally predict modulation of the periodical speech signal from frame n-2 310 to frame n 350. By extrapolating based on the optimal frequency lines, a more accurate prediction of frame n 350 using PLC may be obtained.

In some embodiments, a full search method may be employed, where all frequency lines in a frame are examined to identify a plurality of candidate frequency lines. To detect the plurality of sinusoids, a predetermined number of frequency blocks may be identified within both the first frame 310 and the second frame 330. Each de-quantized frame may be divided into *Lb* frequency blocks, each frequency block including a window span of *Np* bins, each bin including a range of frequencies. Assuming two preceding frames x *n-2* 310 and y *n-1* 330 are available in the buffer, the detector 215 may also extract CST coefficients from 0 to *Lb-1* for each frame. In the examples discussed below, *Np* = 3 bins; however, any suitable window span may be used, both greater and less than 3. Also, the bins in the examples below each cover a range of 25 Hz; however, any suitable bin size may be utilized. For each CST coefficient block of *Np* bins, the goal is to identify the transform function *P(f)* 320, 340 that minimizes the value of S in equation 3:

$$S = \|y_{\text{block}} - P(f)x_{\text{block}}\|^2. \qquad\qquad (3)$$

The predictor transform function *P(f)* may be defined from absolute frequency candidate lines in the central bin of each block, as described below.

In some embodiments, the calculating the gains for the frequency lines and the candidate frequency line selection may be performed for each identified frequency line in the first frame, or on a block-by-block basis. For example, a gain for each frequency line in a first bin of a first block of the first frame may determined. A frequency line in the first block having a) the greatest gain in the block and b) having a gain greater than a predetermined threshold may be identified as a candidate frequency line. The gain for each subsequent frequency line in the first frame may then be determined, with frequency lines having determined gains greater than the predetermined threshold being identified as subsequent candidate frequency lines. Subsequent candidate frequency lines that are Np bins apart from other candidate frequency lines may be selected. When two candidate frequency lines are within Np bins of each other, the candidate frequency line having a greater gain is selected. This may advantageously avoid overlapping of any sinusoids when predictions are made. The predetermined threshold gain value may be any suitable value. For example, candidate frequency lines may be used for PLC only where the prediction gain for the block containing the selected candidate frequency line is at least 0.1dB of $\|y_{\text{block}}\|^2$. This is to select a set of blocks which will contain significant sinusoids that may be well-predicted using the selected optimal predictor. While the full-search method may be very accurate at identifying sinusoids that are useful for PLC, the full-search method may be computationally intensive. The full search, which may be done in a single pass as described above or in two loops (an outer loop identifying each central bin candidate frequency line, and an inner loop that reduces the number of selected candidate frequency lines to one per Np frequency bins), may have a complexity of *Lb* x *Np* x *Fp* (where *Fp* is the frequency step size - the interval between frequency lines). While this may be practical for offline PLC, computational complexity reductions may be desirable for real-time applications.

In alternative embodiments, to reduce computational complexity, a second method may be used to detect the multiple sinusoids. Referred to herein as a hybrid frame detector (since it utilizes aspects of the full-search method described above and the one-frame detector described below), a pseudospectrum may be determined for the first frame (see below for further discussion of a pseudospectrum). Based on the pseudospectrum, bins of the first frame having peak coefficient values may be identified. Similar to the full-search method, a minimal peak distance of Np bins between identified bins may be utilized, to avoid overlap. Within the identified bins, candidate frequency lines may be identified, and gains may be determined for each candidate frequency line. A candidate frequency line having a greatest gain is selected for each identified bin. Since there is no need to determine the gains for every frequency line in the first frame (gains are only determined for frequency lines within identified bins), significant computational savings may be realized, with only a minor loss in prediction quality.

The selected candidate frequency lines may each be associated with sinusoids and may have a frequency line position within a central bin (also referred to herein as an associated frequency bin of the selected candidate frequency line) of a block spanning Np frequency bins. In an exemplary embodiment, once the selected candidate frequency lines are identified in step 150, the bins containing the selected candidate frequency lines may be regarded as center bins of Np-bin blocks that include the selected candidate frequency line. The frequency line position for a candidate frequency line within the center bin may be expressed in terms of a fractional number between -0.5 to 0.5 relative to an absolute center frequency of the block that includes the selected candidate frequency line. For example, a bin may be expressed as Fp points uniformly spaced on the interval from -.5 to .5 with step size 1/Fp. Examples of Fp that may be used are 8, 16 and 32. As a good example one would choose (v+0.5)/Fp to represent the absolute center frequency of the block that includes the selected candidate frequency line, where the bin index v = -Fp/2,..(Fp/2-1). As will be described below, the frequency line position may be used to select sub-band predictors used for PLC.

Returning to FIGs. 1 and 2, once the plurality of candidate frequency lines have been selected from the set of all candidate frequency lines, a plurality of sub-band predictors may be selected from a database of predictor candidates based on the frequency line positions of the selected candidate frequency lines and the bin indexes of the center bins that include the selected candidate frequency lines at step 160. Step 160 may be handled by multi-sine PLC module 225, which may retrieve the sub-band predictors from a predictor candidate database 210. The predictor candidate database 210 may be stored externally to the multi-sine PLC module 225 (as shown in FIG. 2) or may be internal to the multi-sine PLC module 225 in some embodiments.

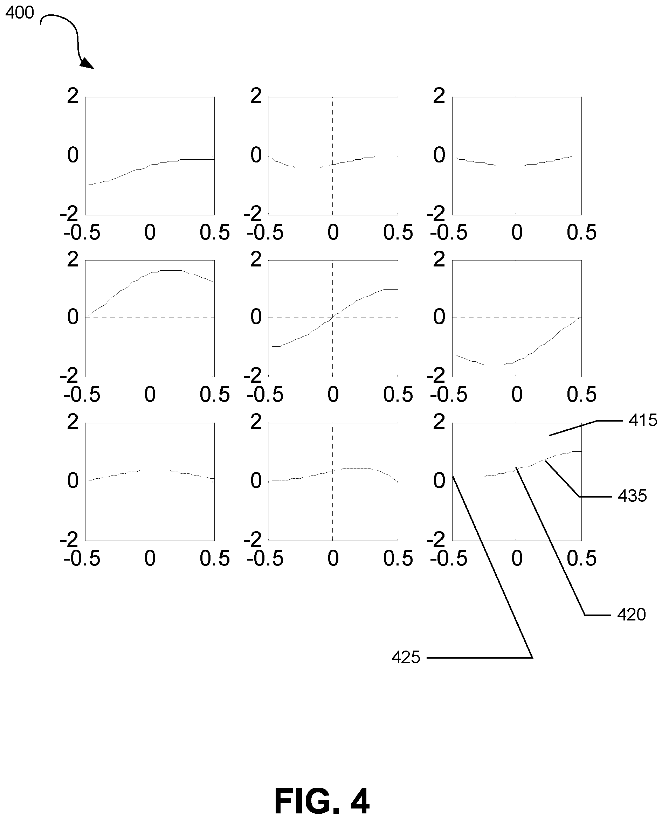

FIG. 4 shows plots 400 of selected sub-band predictors used to perform packet loss concealment, according to an embodiment. The sub-band predictors may be mean squared error (MSE) optimal predictors based on a stationary stochastic signal model. The model represented by the sub-band predictors may be a relaxed version of a sinusoidal signal model also known as a line spectral process. Derivation of the sub-band predictors is described further below, in the discussion of equations 4-6.

In the example shown in FIG. 4, the window size Np is three blocks. Each selected sub-band predictor may be defined as a function that is based on frequency and the bin indexes of the center bin containing the selected candidate frequency line. The bin indexes of the center bins may affect the sign of the selected sub-band predictors for the center bins. If the selected candidate frequency line's corresponding frequency is changed by the equivalent of an even number of MDCT frequency bins, the selected sub-band predictor may be used as-is. However, if the selected candidate frequency line's corresponding frequency is changed by an odd number of MDCT frequency bins, the sign of the selected sub-band predictor for that center bin is inverted.

The selected plurality of sub-band predictors may be arranged as a matrix having a size Np x Np, as shown in FIG. 4. The sub-band predictors may be selected from a candidate pool of predictors based on a) including cross-band; and b) reliance on only previous frames (as opposed to previous and look-ahead frames). In the example of FIG.4, for a 3x3 predictor having a given frequency parameter, the sub-band with the nearest center frequency may be selected as central target sub-band. The fractional frequency of each block ranging from -0.5 to 0.5 is depicted by the abscissas of the nine graphs, which produces a 3 x 3 matrix of coefficients to be applied to the previous frame in the corresponding sub-band coefficients block with central frequency and its two neighboring coefficients. For example, if a fractional frequency of a block containing a selected candidate frequency line is -0.5, then the ordinate of the location 425 of the coefficient graph 415 yields the value of the element in third row and third column of the predictor matrix for the selected candidate frequency line. Similarly locations 420 and 435 correspond to predictor matrix element values for fractional frequencies of zero and 0.25 respectively.

The $Np \times Np$ predictor matrices may be pre-calculated in the database, which occupies a table size of $Fp$ x $Np$ x $Np$, where $Fp$ is the frequency sampling resolution (i.e., how many frequency values are distributed between -0.5 and 0.5). The sub-band predictor selection may be based on the theory that sinusoid signal with known frequency $\Omega$ and random phase $-\pi<\theta<\pi$ can be modeled as:

$$x(t)=cos(\Omega t+ \theta); \tag{4}$$

its auto-correlation function may accordingly be:

$$r(\tau)=cos(\Omega \tau); \tag{5}$$

or it can be relaxed with:

$$r(\tau)=e^{-\xi|\tau|} cos(\Omega \tau). \tag{6}$$

Suppose that the sub-band coefficient $X_a =\langle x, w_\alpha \rangle$, defined by the inner product of $x$ and the CST analysis waveform $w_\alpha$ is to be estimated by a linear combination of a collection of sub-band coefficient $X_b$ represented by $\{\langle x, w_\beta \rangle : \beta \in B\}$:

$$\langle x, w_\alpha \rangle \approx \sum_{\beta \in B} c_\beta \langle x, w_\beta \rangle . \tag{7}$$

The mean value of the squared prediction error may be given by

$$E\left\{\left(\sum_{\beta \in B} c_\beta \langle x, w_\beta \rangle - \langle x, w_\alpha \rangle\right)^2\right\} = \sum_{\beta, \gamma \in B} c_\gamma R_{\gamma\beta} c_\beta - 2\sum_{\beta \in B} R_{\alpha\beta} c_\beta + R_{\alpha\alpha} \tag{8}$$

Where $R_{\alpha\beta}$ is the covariance matrix of $\langle x, w_\alpha \rangle$ and $\langle x, w_\beta \rangle$.

The least mean square error (MSE) solution of the above formula to derive $c_\beta$ is obtained by solving the normal equations for the prediction coefficients $c_\beta$,

$$\sum_{\beta \in B} R_{\gamma\beta} c_\beta = R_{\gamma a}, \quad \gamma \in B . \tag{9}$$

Then the right hand of the MSE formula may be reduced to:

$$R_{\alpha\alpha} - \sum_\beta R_{\alpha\beta} c_\beta . \tag{10}$$

In general, it may be difficult to derive the two covariance matrices to calculate c. However, for a sinusoid signal and a modulated CST such as the Modified Discrete Cosine Transform (MDCT), the two covariance matrices can easily be derived and used to tabulate a prediction matrix $(-1)^k P(f)$ for $f$ in steps of $1/Fp$, $P(f)$ may be calculated as follows. Below, $L$ is the transform size of the CST.

- The exact frequency may be determined using the central frequency for the entire frame plus fractional frequency $f$:

$$\Omega = \pi(m+0.5+f)/L, \text{ where } m \text{ is the central bin index;} \tag{11}$$

- An auto-correlation function may be calculated for the sinusoid signal model and its shifts by one frame in the forward and backward directions, respectively:

$$r(\tau) = e^{-\xi|\tau|} \cos(\Omega\tau) \tag{12}$$

$$rf(\tau) = e^{-\xi|\tau+L|} \cos(\Omega(\tau+L)); \tag{13}$$

$$rb(\tau) = e^{-\xi|\tau-L|} \cos(\Omega(\tau-L)); \tag{14}$$

To derive a $Np \times Np$ predictor for two successive CST coefficients, $X_n(i)=1$ for $i=m+n$ and zero otherwise.
- For $1 \leq n \leq Np$, , calculate time domain samples via inverse CST:

$$s_n = ICST(X_n), \tag{15}$$

and compute the cross correlation of the waveforms $r_{ba} = s_b * \check{s}_a$, $1 \leq a \leq Np$, $1 \leq b \leq Np$.
- Form covariance matrices $R_{xx}$ and $R_{yx}$ with components:

$$R_{xx}(b,a) = \langle r, r_{ba} \rangle \; ; \tag{16}$$

$$R_{yx}(b,a) = \begin{cases} \langle rf, r_{ba} \rangle, & \text{if forward PLC is performed;} \\ \langle rb, r_{ba} \rangle, & \text{if backward PLC is performed.} \end{cases} \tag{17}$$

Here the inner products are centered such that $\tau = 0$ corresponds to the middle sample of $r_{ba}$.

- Then the predictor table for fractional frequency $f$ is calculated as:

$$P(f) = e^{\xi L} R_{yx} R_{xx}^{-1}. \tag{18}$$

For greater detail on the derivation of exemplary predictor tables, also see Villemoes, Lars, Model Based Prediction in a Critically Sampled Filterbank, Patent Cooperation Treaty Application No. WO 2014/108393 A1, filed January 7, 2014.

Returning to FIGs. 1 and 2, the selected plurality of sub-band predictors may then be applied to blocks of the selected subset of frequency bins of the second frame to obtain predicted sub-band coefficients at step 170, where the predicted sub-band coefficients may be inserted into the received audio stream in place of the lost frame. For speech signals, which are linear combinations of single sinusoids, it's simple to overlap-add all the predicted sub-band coefficients from single sinusoid predictor; however, as described above, a stride requirement of Np bins between selected candidate frequency lines may be used to prevent overlap.

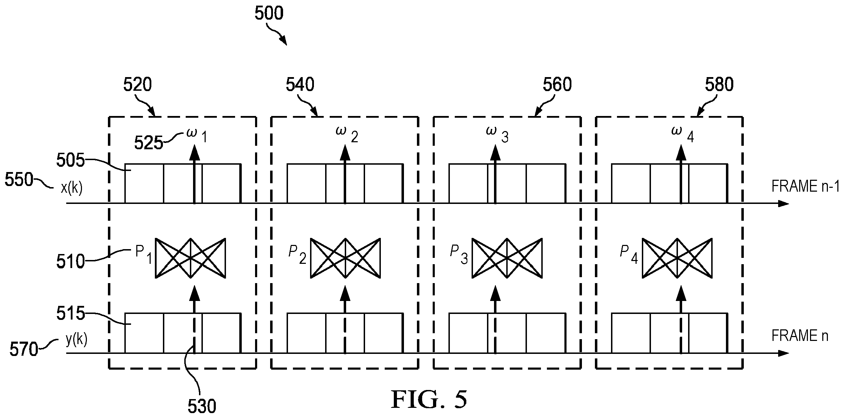

FIG. 5 shows a representation 500 of selected frequency blocks 520, 540, 560, and 580 of a previous frame 550 and the application of sub-band predictors $P_1$-$P_4$ to generate coefficients for a replacement frame 570, according to an embodiment. For the multiple sinusoid signals shown in blocks 520, 540, 560, and 580 (e.g., frequency line 525 in block 505), each sinusoid will be propagated to the corresponding blocks 515 of width Np by using the fractional frequency line position as input for the predictor candidate table 400. The anticipated block 515 may include calculated sinusoid value 530. ANp x Np prediction matrix 510 is thereby determined for the selected frequency bin having values calculated by each selected sub-band predictor function. The process is repeated and added for all the sinusoidal components in the signal model. It's recommended (but not restricted to) use the parameter Np=3, which corresponds to a 75 Hz frequency spacing for a configuration with a transform stride of 20 ms.

To apply the sub-band predictors to the first frame, in an exemplary embodiment the central bin containing $\omega 1$ in FIG. 5 may be identified. The identified central bin may define the Np-bin block around selected candidate frequency line $\omega 1$. The fractional frequency position f of $\omega 1$ relative to the middle bin center frequency for the entire frame may then be determined. Based on the determined fractional frequency with respect to the middle bin center frequency for the entire frame, the tabulated sub-band predictor $P(f1)$ with f1 closest to f may be looked up in the sub-band predictor database. Finally, before applying the sub-band predictor, a sign of the sub-band predictor may be determined depending on the parity of the central bin. For example, a factor of $(-1)^k$ may be multiplied by $P(f1)$, as described previously based on the fractional frequency position f of the located central block. The resulting Np x Np matrix may be applied to the Np block of frame n-1 to get the predicted Np block of frame n. The applying the sub-band predictors may be repeated for $\omega 2$, $\omega 3$ etc.

Moreover, in order to make a smooth transition, for unaffected coefficients, a simple repetition of corresponding sub-band coefficients in previous frame may be conducted in addition with scrambling signs. This is to ensure that it is consistent with what would be reasonable and natural in that spectral hole. In FIG. 5, this simply means that the bins between anticipated blocks 560 and 580, for example, would have coefficients that are substantially duplicated from frame n-1.

Returning to FIG. 2, in some embodiments, based on the above results in addition with some extra information such as masker types, frame types, time positions that are provided by the module "context detection" 220, corresponding sub-band predictors are selected from the predictor candidates database 210 which may be created at the initialization stage. Context detection may provide guided prior information to perform PLC, which includes:

- Previous available frame count N will determine whether two frame detector or one frame detector is going to be chosen;

- Frame type information, such as consonant, vowel, fricative or plosive tag of the frame, pitch and harmonics position and volume, will guide the frequency resolution and band chosen in fractional frequency detector;

- Store some statistics about instant rate of speech, and record concealment position after the previous received frame: For a very fast speech, multi-sine prediction will be performed for the first lost frame, and rest frames will be concealed by other PLC approaches which is more diffuse; For a slow speech, multi-sine prediction will exist for two or three frames; It should be noticed that for this causal PLC, a maximum concealment frame number should be equal or less than 4, otherwise it would be quite unnatural; and

- Deliver information about whether this is a server PLC or client PLC. If it's the server one, some simple "other PLC" like repeating CST coefficients with scrambling signs are chosen; if not, more sophisticated approach like our proposed PLC can be utilized, which will output time domain samples.

In such embodiments, multi-sine prediction-based PLC 225 may then be performed by functions accepting the two inputs: 1) Corresponding predictor tables; 2) Available sub-band coefficients located in the predictor frequency position; The output of prediction may be the same type of sub-band coefficients 235 that can either be used to transmit, decode, or guide the next packet loss concealment in case of bursty loss at 240. Notice that this multi-sine prediction only happens in the first N lost frames, depending on the rate of speech; e.g. for a quick talker, N is commonly less than 2; For the rest of bursty loss, various alternative PLC approaches 230 can be selected, depending on the specific use cases.

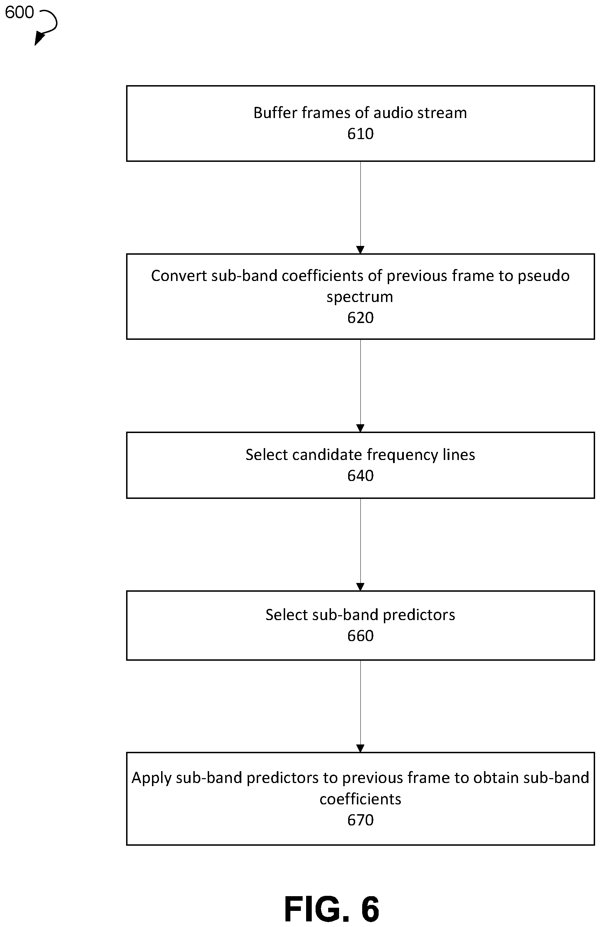

FIG. 6 shows a flow diagram for method 600 for concealing packet loss in a received audio stream using a single-frame multi-sinusoid detector, according to an embodiment of the invention. Step 610 may function substantially the same as step 110 of method 100. However, given that only previous frame is available, it is infeasible to apply the technique described in method 100. Thus, a one frame detector may be employed as an alternative to select a set of optimal sinusoid lines in the previous frame.

Here, a pseudo spectrum, which is a regularization procedure that may be less sensitive to phase shifts than original CST coefficients, may be applied to the CST coefficients at step 620, using the following exemplary formula, for example:

$$S_{p-1}[k] = (X_{p-1}{}^2[k] + (X_{p-1}[k+1] - X_{p-1}[k-1])^2)^{1/2} \qquad (19)$$

The pseudo spectrum may be applied to better track the frequency location of sinusoids, since the frequency localization of the coefficients with maximum amplitude does not depend as much on phase as for the original CST coefficients. Due to these properties, spectral peaks are traced in $S_{p-1}$ that satisfy:

- A distance between two successive harmonic peak distance must be equal to or greater than a predetermined threshold $Ft$ number of bins;

- The spectral peaks must have gains that are greater than a minimal volume threshold (i.e., magnitude of the pseudo spectrum coefficient at the peak) to show there is a significant harmonic at the frequency line associated with the spectral peak.

In the former condition, $Ft$ may be chosen to be 5 to ensure that both the left and right two pseudo-spectrum sub-band bins are less than the peak, since the fractional position of the bin containing the spectral peak may be exclusively impacted by the neighboring four bins around the peak. The second condition listed above may pick the significant harmonic peaks that are audible, which can also reduce the complexity. Selected frequency peaks are treated as central frequencies of sinusoid signals, around which, optimal fractional number is determined by the left and right two bins in the pseudo-spectrum. The algorithmic basis is that the neighboring amplitude will dominate real sine position leaning to which direction (to -0.5 or 0.5) and the degree (true value in [-0.5, 0.5]). For example, if $Ft = 5$, only four distances $d1$, $d2$, $d3$, $d4$ are calculated as follows:

$$d1 = s[k] - s[k-2]; \qquad (20)$$

$$d2 = s[k] - s[k-1]; \qquad (21)$$

$$d3 = s[k] - s[k+1]; \qquad (22)$$

$$d4 = s[k] - s[k+2]; \qquad (23)$$

Weights impacted by the two neighboring 1st and 2nd frames may be defined as w1 and w2. A single parameter w is defined, which is a proportional weight of the adjacent frequency bin's impact to the peak. The parameter w can be calculated as:

$$w = \frac{w_2}{w_1 + w_2}$$

$$(24)$$

The fractional frequency is calculated as follows in equation 26 and is rounded to the closest frequency respected to the frequency resolution. In the above formula, if $w2 = 0$, frequency will be decided by:

$$f = (d_1 - d_3)/2(d_1 + d_3) \qquad\qquad (25)$$

Because the true and predicted answer lie in the range between -0.5 and 0.5, a blind Monte Carlo simulation will result in an average RMSE of 0.4083, which is shown by the analytical formula in equation 27. It should be noted that, in equation 27, the integration intervals from the first stages of the calculation could have been set from 0 to 1, given that the root of the expectation of the square *difference* $E\{(X-Y)^2)\}$ is being computed for two independent uniformly distributed random variables.

$$fraction = -0.5 + \frac{d_1\omega_1 + d_2\omega_2}{(d_1 + d_3)\omega_1 + (d_2 + d_4)\omega_2}$$

$$= \frac{2d_1\omega_1 + 2d_2\omega_2 - d_1\omega_1 - d_3\omega_1 - d_2\omega_2 - d_4\omega_2}{2\omega_1(d_1 + d_3) + 2\omega_2(d_2 + d_4)}$$

$$= \frac{\omega_1(d_1 - d_3) + \omega_2(d_2 - d_4)}{2\omega_1(d_1 + d_3) + 2\omega_2(d_2 + d_4)}$$

$$(26)$$

$$RMSE = \sqrt{\int_{x=-0.5}^{0.5} \int_{y=-0.5}^{0.5} (x-y)^2 dxdy}$$

$$= \sqrt{\int_{x=-0.5}^{0.5} \int_{y=-0.5}^{0.5} (x^2 - 2xy + y^2) dxdy}$$

$$= \sqrt{\int_{x=0}^{1} \left[ x^2 y - xy^2 + \frac{1}{3} y^3 \right] \Big|_{0}^{1} dx}$$

$$= \sqrt{\int_{x=0}^{1} \left( x^2 - x + \frac{1}{3} \right) dx}$$

$$= \sqrt{\frac{1}{3} x^3 - \frac{1}{2} x^2 + \frac{1}{3} x \Big|_{0}^{1}}$$

$$= \sqrt{\frac{2}{3} - \frac{1}{2}} = \sqrt{\frac{1}{6}} = 0.4083$$

(27)

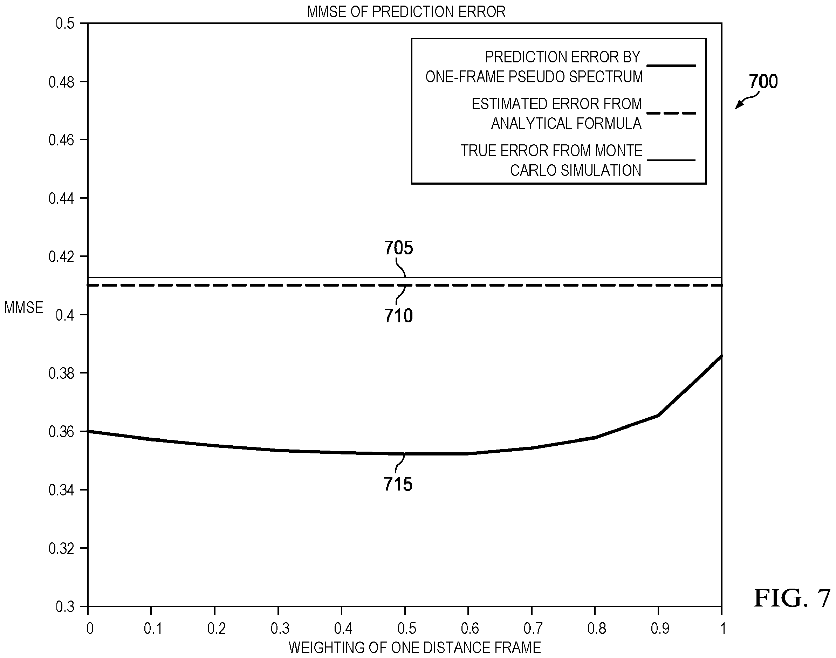

FIG. 7 shows a plot illustrating impact of weight value on prediction error in a single-frame multi-sinusoid detector, according to an embodiment. In FIG. 7, the X-axis refers to the parameter w and the Y-axis refers to the RMSE. Line 705, which is the Monte Carlo-derived RMSE, is quite close to the analytic formula-derived line 710. From lowest point in line 715, it can be seen that both neighboring $1^{st}$ and $2^{nd}$ frames will impact the fractional frequency ("w=0" means frequency is dependent on neighboring $1^{st}$ frame, and "w=1" means depending on neighboring $2^{nd}$ frame). From Fig.7, it can be seen that the $1^{st}$ frame will have larger impact since if w<0.5, the error is lower than what's above 0.5. In practice, a fixed weight w=0.5 (if w<0.5 the performance may not suffer from considerable drop) is chosen and used for all, which will lead to an estimated prediction error of about 0.35. However, if a two-frame detector is used, this RMSE will drop to a value that is close to the frequency resolution derived RMSE.

In conclusion, the one-frame method may be better than blind guessing, but is inferior to two frames detector unless the frequency resolution $Fp$ for two frame detector is lower than 1/0.35~=3 (In practice for speech, we often choose $Fp$ = 8 in a codec context and a much safer resolution $Fp$ = 16 can be chosen if you have enough computing power). Although one-frame detection sacrifices some prediction accuracy, it may be up to 10-20 times faster than two-frame detection in some embodiments. Other ways speed can be optimized include: reducing the frequency resolution from 32 to 8 tap (ranging from -0.5-0.5); selecting frames that contain only tonal speech to do sophisticated searching; and/or selecting major tonal bands and prioritize bands with pitch and 1st harmonic to be searched with higher resolution. Returning to FIG. 6, once multi-sine detection has taken place at steps 620-640 as described above, the selection of sub-band predictors in step 660 and application of the sub-band predictors in step 670 functions substantially the same as steps 160 and 170 of method 100.

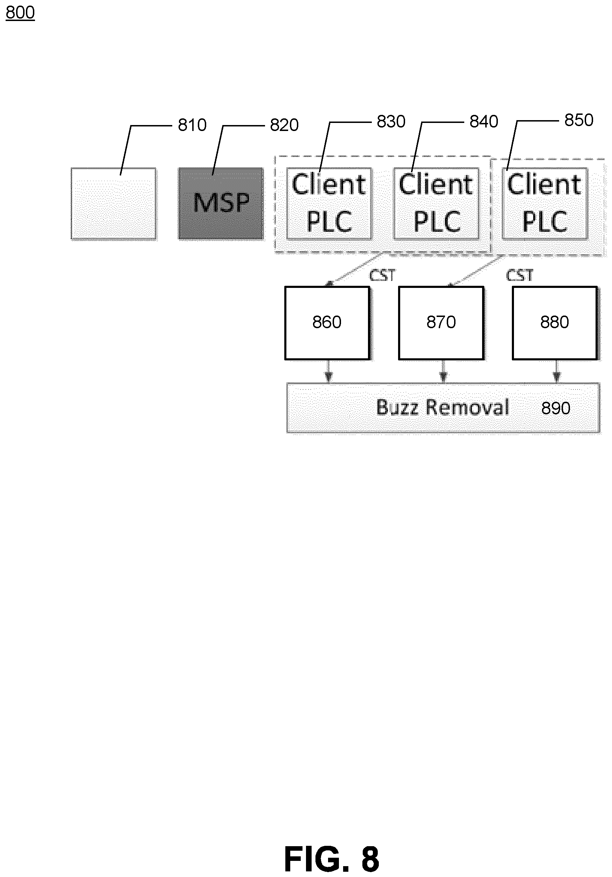

Speech signal changes rapidly in time. For bursty loss, it's recommended to perform other type of PLC after concealing first N frames (N is usually less than three), depending on the rate of speech. Otherwise, concealed speech may sound robotic and unnatural. FIG. 8 shows a simplified block diagram 800 of a plurality of frames 810-880 of an audio stream where different types of packet loss concealment are applied, according to an embodiment. In diagram 800, transmitted frame 810 is followed by frame 820, where server-side PLC has been applied (e.g., the one-frame detection based). The other types of PLC, applied by the client device, can be manipulated in any domain. If PLC is deployed in the server, and other types of PLC output time domain samples, as seen in frames 830, 840, and 850, forward CST may need to be re-applied to the samples in the time domain to output CST sub-band coefficients 860, 870, and 880 respectively. If more complexity is allowed, diffusing CST coefficients using low-pass filter and scrambling signs at block 890 may be considered to remove the buzz.

For bursty loss larger than 4 frames, if the algorithm is causal, we can simply fade out to zero. However, in most of the VoIP cases there are jitter buffers, if it's possible to access to the next arrived packet, a one-frame detection based back-ward MSP can be configured to conceal the last lost frame, the transitional CST coefficients between forward MSP and backward MSP are concealed by other sub-optimal PLC.

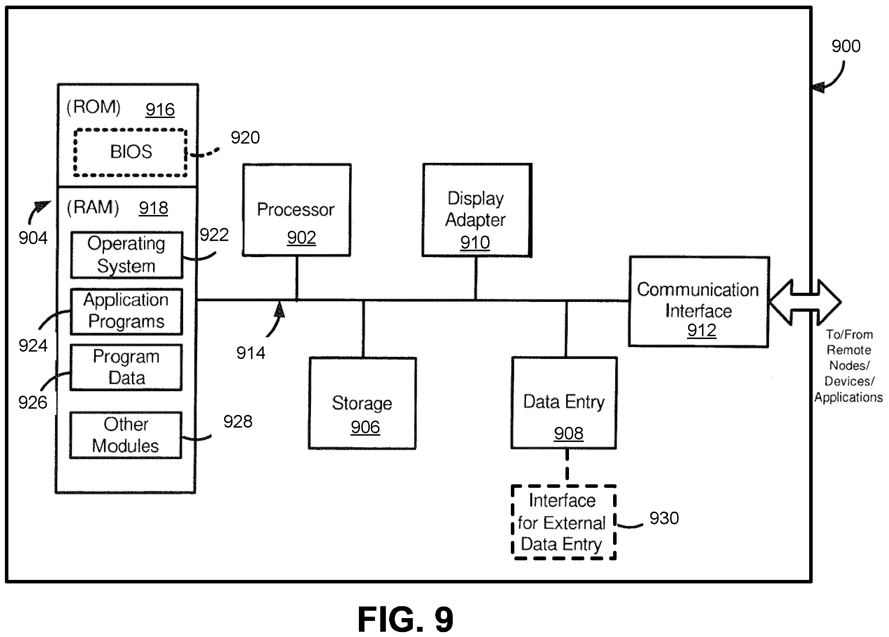

The methods and modules described above may be implemented using hardware or software running on a computing system. FIG. 9 is a block diagram of an exemplary computing system for concealing packet loss using multi-sinusoid detection according to various embodiments of the present invention. With reference to FIG. 9, an exemplary system for implementing the subject matter disclosed herein, including the methods described above, includes a hardware device 900, including a processing unit 902, memory 904, storage 906, data entry module 908, display adapter 910, communication interface 912, and a bus 914 that couples elements 904-912 to the processing unit 902.

The bus 914 may comprise any type of bus architecture. Examples include a memory bus, a peripheral bus, a local bus, etc. The processing unit 902 is an instruction execution machine, apparatus, or device and may comprise a microprocessor, a digital signal processor, a graphics processing unit, an application specific integrated circuit (ASIC), a field programmable gate array (FPGA), etc. The processing unit 902 may be configured to execute program instructions stored in memory 904 and/or storage 906 and/or received via data entry module 908.

The memory 904 may include read only memory (ROM) 916 and random access memory (RAM) 918. Memory 904 may be configured to store program instructions and data during operation of device 900. In various embodiments, memory 904 may include any of a variety of memory technologies such as static random access memory (SRAM) or dynamic RAM (DRAM), including variants such as dual data rate synchronous DRAM (DDR SDRAM), error correcting code synchronous DRAM (ECC SDRAM), or RAMBUS DRAM (RDRAM), for example. Memory 904 may also include nonvolatile memory technologies such as nonvolatile flash RAM (NVRAM) or ROM. In some embodiments, it is contemplated that memory 904 may include a combination of technologies such as the foregoing, as well as other technologies not specifically mentioned. When the subject matter is implemented in a computer system, a basic input/output system (BIOS) 920, containing the basic routines that help to transfer information between elements within the computer system, such as during start-up, is stored in ROM 916.

The storage 906 may include a flash memory data storage device for reading from and writing to flash memory, a hard disk drive for reading from and writing to a hard disk, a magnetic disk drive for reading from or writing to a removable magnetic disk, and/or an optical disk drive for reading from or writing to a removable optical disk such as a CD ROM, DVD or other optical media. The drives and their associated computer-readable media provide nonvolatile storage of computer readable instructions, data structures, program modules and other data for the hardware device 900.

It is noted that the methods described herein can be embodied in executable instructions stored in a non-transitory computer readable medium for use by or in connection with an instruction execution machine, apparatus, or device, such as a computer-based or processor-containing machine, apparatus, or device. It will be appreciated by those skilled in the art that for some embodiments, other types of computer readable media may be used which can store data that is accessible by a computer, such as magnetic cassettes, flash memory cards, digital video disks, Bernoulli cartridges, RAM, ROM, and the like may also be used in the exemplary operating environment. As used here, a "computer-readable medium" can include one or more of any suitable media for storing the executable instructions of a computer program in one or more of an electronic, magnetic, optical, and electromagnetic format, such that the instruction execution machine, system, apparatus, or device can read (or fetch) the instructions from the computer readable medium and execute the instructions for carrying out the described methods. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD™), a BLU-RAY disc; and the like.

A number of program modules may be stored on the storage 906, ROM 916 or RAM 918, including an operating system 922, one or more applications programs 924, program data 926, and other program modules 928. A user may enter commands and information into the hardware device 900 through data entry module 908. Data entry module 908 may include mechanisms such as a keyboard, a touch screen, a pointing device, etc. Other external input devices (not shown) are connected to the hardware device 900 via external data entry interface 930. By way of example and not limitation, external input devices may include a microphone, joystick, game pad, satellite dish, scanner, or the like. In some embodiments, external input devices may include video or audio input devices such as a video camera, a still camera, etc. Data entry module 908 may be configured to receive input from one or more users of device 900 and to deliver such input to processing unit 902 and/or memory 904 via bus 914.

The hardware device 900 may operate in a networked environment using logical connections to one or more remote nodes (not shown) via communication interface 912. The remote node may be another computer, a server, a router, a peer device or other common network node, and typically includes many or all of the elements described above relative to the hardware device 900. The communication interface 912 may interface with a wireless network and/or a wired network. Examples of wireless networks include, for example, a BLUETOOTH network, a wireless personal area network, a wireless 802.11 local area network (LAN), and/or wireless telephony network (e.g., a cellular, PCS, or GSM network). Examples of wired networks include, for example, a LAN, a fiber optic network, a wired personal area network, a telephony network, and/or a wide area network (WAN). Such networking environments are commonplace in intranets, the Internet, offices, enterprise-wide computer networks and the like. In some embodiments, communication interface 912 may include logic configured to support direct memory access (DMA) transfers between memory 904 and other devices.

In a networked environment, program modules depicted relative to the hardware device 900, or portions thereof, may be stored in a remote storage device, such as, for example, on a server. It will be appreciated that other hardware and/or software to establish a communications link between the hardware device 900 and other devices may be used.

It should be understood that the arrangement of hardware device 900 illustrated in FIG. 9 is but one possible implementation and that other arrangements are possible. It should also be understood that the various system components (and means) defined by the claims, described above, and illustrated in the various block diagrams represent logical components that are configured to perform the functionality described herein. For example, one or more of these system components (and means) can be realized, in whole or in part, by at least some of the components illustrated in the arrangement of hardware device 900. In addition, while at least one of these components are implemented at least partially as an electronic hardware component, and therefore constitutes a machine, the other components may be implemented in software, hardware, or a combination of software and hardware. More particularly, at least one component defined by the claims is implemented at least partially as an electronic hardware component, such as an instruction execution machine (e.g., a processor-based or processor-containing machine) and/or as specialized circuits or circuitry (e.g., discrete logic gates interconnected to perform a specialized function), such as those illustrated in FIG. 9. Other components may be implemented in software, hardware, or a combination of software and hardware. Moreover, some or all of these other components may be combined, some may be omitted altogether, and additional components can be added while still achieving the functionality described herein. Thus, the subject matter described herein can be embodied in many different variations.

In the description above, the subject matter may be described with reference to acts and symbolic representations of operations that are performed by one or more devices, unless indicated otherwise. As such, it will be understood that such acts and operations, which are at times referred to as being computer-executed, include the manipulation by the processing unit of data in a structured form. This manipulation transforms the data or maintains it at locations in the memory system of the computer, which reconfigures or otherwise alters the operation of the device in a manner well understood by those skilled in the art. The data structures where data is maintained are physical locations of the memory that have particular properties defined by the format of the data. However, while the subject matter is being described in the foregoing context, it is not meant to be limiting as those of skill in the art will appreciate that various of the acts and operation described hereinafter may also be implemented in hardware.

For purposes of the present description, the terms "component," "module," and "process," may be used interchangeably to refer to a processing unit that performs a particular function and that may be implemented through computer program code (software), digital or analog circuitry, computer firmware, or any combination thereof.

It should be noted that the various functions disclosed herein may be described using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, physical (non-transitory), non-volatile storage media in various forms, such as optical, magnetic or semiconductor storage media.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

In the description above and throughout, numerous specific details are set forth in order to provide a thorough understanding of the disclosure. It will be evident, however, to one of ordinary skill in the art, that the disclosure may be practiced without these specific details. In other instances, well-known structures and devices are shown in block diagram form to facilitate explanation. The description of the preferred an embodiment is not intended to limit the scope of the claims appended hereto. Further, in the methods disclosed herein, various steps are disclosed illustrating some of the functions of the disclosure. One will appreciate that these steps are merely exemplary and are not meant to be limiting in any way. Other steps and functions may be contemplated without departing from the scope as defined by the claims.

**Claims**

1.  A method for concealing packet loss in a received audio stream, the method comprising:

    buffering frames of the received audio stream; and
    in response to receiving a determination that a frame of the audio stream has been lost:

    determining a pseudospectrum for a previous frame of the received audio stream, the previous frame occurring one frame prior to the lost frame;
    identifying frequency bins having peak coefficient values within the previous frame based on the determined pseudospectrum, the identified frequency bins having a minimal peak distance of Np frequency bins between each other, the identified frequency bins each being associated with a fractional frequency with respect to an absolute center frequency bin of the previous frame;
    selecting frequency lines within the identified frequency bins, the selected frequency lines each having frequency line positions within the identified frequency bins, the selecting the plurality of candidate frequency lines comprising selecting a candidate frequency line having a greatest magnitude of the pseudo spectrum coefficient value for each identified frequency bin;
    selecting, from a database of predictor candidates, a plurality of sub-band predictors for each selected frequency line based on the frequency line positions of the selected frequency lines and the fractional frequencies of the identified frequency bins, each selected sub-band predictor being a function of frequency, the selected plurality of sub-band predictors being arranged as a matrix having a size Np x Np; and
    applying the selected plurality of sub-band predictors for each selected frequency line to blocks of the previous frame that include the identified frequency bins to obtain predicted sub-band coefficients, the blocks of the previous frame including Np frequency bins, the predicted sub-band coefficients being used to reconstruct the lost frame.

2.  The method of claim 1, wherein the identifying frequency bins is further based on the identified frequency bins each having coefficients greater than a predetermined volume threshold, wherein when two identified frequency bins are within Np frequency bins of one another, only the one of the two identified frequency bins having the greatest coefficient is selected.

3.  A computer program product having instructions which, when executed by a computing device or system, cause said computing device or system to perform the method according to any of the claims 1-2.

4.  A data-processing system configured to perform the method according to any of the claims 1-2.

**Patentansprüche**

1.  Verfahren zum Verbergen von Paketverlusten in einem empfangenen Audiostream, wobei das Verfahren umfasst:

    Puffern von Rahmen des empfangenen Audiostreams; und
    als Reaktion auf das Empfangen einer Bestimmung, dass ein Rahmen des Audiostreams verloren gegangen ist:

    Bestimmen eines Pseudospektrums für einen vorhergehenden Rahmen des empfangenen Audiostreams, wobei der vorhergehende Rahmen einen Rahmen vor dem verlorenen Rahmen vorkommt;
    Identifizieren von Frequenzbereichswerten, die Spitzenkoeffizientenwerte innerhalb des vorhergehenden Rahmens aufweisen, basierend auf dem bestimmten Pseudospektrum, wobei die identifizierten Frequenzbereichswerte eine Mindestspitzendistanz von Np Frequenzbereichswerten zwischen einander aufweisen, wobei die identifizierten Frequenzbereichswerte jeweils mit einer Bruchteilfrequenz im Verhältnis zu einem absoluten Mittenfrequenzbereichswert des vorhergehenden Rahmens verknüpft sind;
    Auswählen von Frequenzlinien innerhalb der identifizierten Frequenzbereichswerte, wobei die ausgewählten Frequenzlinien jeweils Frequenzlinienpositionen innerhalb der identifizierten Frequenzbereichswerte aufweisen, wobei das Auswählen der Vielzahl von Kandidatenfrequenzlinien das Auswählen einer Kandidatenfrequenzlinie umfasst, die eine größte Größe des Koeffizientenwertes des Pseudospektrums für jeden identifizierten Frequenzbereichswert aufweist;

Auswählen, aus einer Datenbank von Prädiktorkandidaten, einer Vielzahl von Teilbandprädiktoren für jede ausgewählte Frequenzlinie basierend auf den Frequenzlinienpositionen der ausgewählten Frequenzlinien und den Bruchteilfrequenzen der identifizierten Frequenzbereichswerte, wobei jeder ausgewählte Teilbandprädiktor eine Funktion der Frequenz ist, wobei die ausgewählte Vielzahl von Teilbandprädiktoren als eine Matrix, die eine Größe von Np x Np aufweist, angeordnet ist; und

Anwenden der ausgewählten Vielzahl von Teilbandprädiktoren für jede ausgewählte Frequenzlinie auf Blöcke des vorhergehenden Rahmens, welche die identifizierten Frequenzbereichswerte umfassen, um vorhergesagte Teilbandkoeffizienten zu erhalten, wobei die Blöcke des vorhergehenden Rahmens Np Frequenzbereichswerte umfassen, wobei die vorhergesagten Teilbandkoeffizienten verwendet werden, um den verlorenen Rahmen wiederherzustellen.

2. Verfahren nach Anspruch 1, wobei das Identifizieren von Frequenzbereichswerten weiter auf den identifizierten Frequenzbereichswerten basiert, die jeweils Koeffizienten aufweisen, die größer als eine vorbestimmte Volumenschwelle sind, wobei, wenn zwei identifizierte Frequenzbereichswerte innerhalb von Np Frequenzbereichswerten voneinander liegen, nur derjenige der beiden identifizierten Frequenzbereichswerte ausgewählt wird, der den größten Koeffizienten aufweist.

3. Computerprogrammprodukt mit Anweisungen, die, wenn sie von einer Rechenvorrichtung oder einem Rechensystem ausgeführt werden, bewirken, dass die Rechenvorrichtung oder das Rechensystem das Verfahren nach einem der Ansprüche 1 bis 2 ausführt.

4. Datenverarbeitungssystem, das konfiguriert ist, um das Verfahren nach einem der Ansprüche 1 bis 2 auszuführen.

**Revendications**

1. Procédé de dissimulation d'une perte de paquets dans un flux audio reçu, le procédé comprenant :

la mise en mémoire tampon de trames du flux audio reçu ; et
en réponse à la réception d'une détermination qu'une trame du flux audio a été perdue :

la détermination d'un pseudo-spectre pour une trame précédente du flux audio reçu, la trame précédente apparaissant une trame avant la trame perdue ;

l'identification de segments de fréquence présentant des valeurs de coefficient de crête dans la trame précédente sur la base du pseudo-spectre déterminé, les segments de fréquence identifiés présentant une distance de crête minimale de Np segments de fréquence entre eux, les segments de fréquence identifiés étant associés chacun à une fréquence fractionnaire par rapport à un segment de fréquence centrale absolue de la trame précédente ;

la sélection de lignes de fréquence dans les segments de fréquence identifiés, les lignes de fréquence sélectionnées présentant chacune des positions de ligne de fréquence dans les segments de fréquence identifiés, la sélection de la pluralité de lignes de fréquence candidates comprenant la sélection d'une ligne de fréquence candidate présentant une grandeur la plus élevée de la valeur de coefficient de pseudo-spectre pour chaque segment de fréquence identifié ;

la sélection, à partir d'une base de données de candidats de prédicteurs, d'une pluralité de prédicteurs de sous-bande pour chaque ligne de fréquence sélectionnée sur la base des positions de ligne de fréquence des lignes de fréquence sélectionnées et des fréquences fractionnaires des segments de fréquence identifiés, chaque prédicteur de sous-bande sélectionné étant une fonction de fréquence, la pluralité sélectionnée de prédicteurs de sous-bande étant agencée sous la forme d'une matrice présentant une taille Np x Np ; et

l'application de la pluralité sélectionnée de prédicteurs de sous-bande pour chaque ligne de fréquence sélectionnée à des blocs de la trame précédente qui incluent les segments de fréquence identifiés pour obtenir des coefficients de sous-bande prédits, les blocs de la trame précédente incluant Np segments de fréquence, les coefficients de sous-bande prédits étant utilisés pour reconstruire la trame perdue.

2. Procédé selon la revendication 1, dans lequel l'identification de segments de fréquence est basée en outre sur les segments de fréquence identifiés présentant chacun des coefficients plus grands qu'un seuil de volume prédéterminé, dans lequel, quand deux segments de fréquence identifiés sont à moins de Np segments de fréquence l'un de l'autre, seul celui des deux segments de fréquence identifiés présentant le plus grand coefficient est sélectionné.

3. Produit de programme informatique comportant des instructions qui, quand elles sont exécutées par un dispositif ou système informatique, amènent ledit dispositif ou système informatique à réaliser le procédé selon l'une quelconque des revendications 1-2.

4. Système de traitement de données configuré pour réaliser le procédé selon l'une quelconque des revendications 1-2.

100

```
┌─────────────────────────────────────────────────────┐
│            Buffer frames of audio stream             │
│                        110                           │
└─────────────────────────────────────────────────────┘
                          │
                          ▼
┌─────────────────────────────────────────────────────┐
│       Identify sinusoids in both first and second    │
│                       frame                          │
│                        120                           │
└─────────────────────────────────────────────────────┘
                          │
                          ▼
┌─────────────────────────────────────────────────────┐
│   Calculate gain of candidate frequency lines        │
│            between first and second frame            │
│                        140                           │
└─────────────────────────────────────────────────────┘
                          │
                          ▼
┌─────────────────────────────────────────────────────┐
│            Select candidate frequency lines          │
│                        150                           │
└─────────────────────────────────────────────────────┘
                          │
                          ▼
┌─────────────────────────────────────────────────────┐
│              Select sub-band predictors              │
│                        160                           │
└─────────────────────────────────────────────────────┘
                          │
                          ▼
┌─────────────────────────────────────────────────────┐
│  Apply sub-band predictors to second frame to obtain │
│                  sub-band coefficients               │
│                        170                           │
└─────────────────────────────────────────────────────┘
```

# FIG. 1

**FIG. 2**

**FIG. 3**

FIG. 4

FIG. 5

600

Buffer frames of audio stream
610

Convert sub-band coefficients of previous frame to pseudo spectrum
620

Select candidate frequency lines
640

Select sub-band predictors
660

Apply sub-band predictors to previous frame to obtain sub-band coefficients
670

# FIG. 6

MMSE OF PREDICTION ERROR

FIG. 7

800

FIG. 8

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 18193942
- WO 2014202770 A1

- WO 2014108393 A1

### Non-patent literature cited in the description

- **DAUDET L et al.** MDCT Analysis of Sinusoids: Exact Results and Applications to Coding Artifacts Reduction. *IEEE TRANSACTIONS ON SPEECH AND AUDIO PROCESSING,* vol. 12 (3
- General audio codec audio processing functions; Enhanced aacPlus general audio codec; Floating point ANSI-C code. *3GPP TS 26.410,* January 2005

- **SUN, XUEJING.** Pitch Determination and Voice Quality Analysis using Subharmonic-to-Harmonic Ration. *International Conference on Acoustics, Speech, and Signal Processing,* 2002